# EUROPÄISCHE PATENTSCHRIFT

(11) **EP 1 877 280 B1**
(45) Veröffentlichungstag und Bekanntmachung des Hinweises auf die Patenterteilung: **22.10.2008**
(21) Anmeldenummer: 06705928.7
(22) Anmeldetag: 07.02.2006
(51) Int. Cl.: B60R 13/02, B62D 25/06

(54) **FAHRZEUGDACH**
VEHICLE ROOF
TOIT DE VEHICULE

(30) Priorität: 09.02.2005 DE 102005005890
(43) Veröffentlichungstag der Anmeldung: 16.01.2008
(73) Patentinhaber: Webasto AG, 82131 Stockdorf (DE)
(72) Erfinder: LEROY, Alain, 86911 Diessen/Riederau (DE); PSCHORN, Heinz, 85221 Dachau (DE)
(86) Internationale Anmeldenummer: PCT/DE2006/000202
(87) Internationale Veröffentlichungsnummer: WO 2006/084441

(56) Entgegenhaltungen:
- EP-A- 1 389 567
- EP-A- 1 493 650
- DE-A1- 10 224 969
- US-B1- 6 367 872

## Beschreibung

Die Erfindung betrifft ein Fahrzeugdach, insbesondere ein Fahrzeugdach eines Personenkraftwagens, nach dem Oberbegriff des Patentanspruches 1.

Ein Fahrzeugdach ist aus der US 5,825,096 bekannt und umfasst ein Himmelelement, das in seinem der Windschutzscheibe zugewandten Randbereich mit einem Trägerelement für elektrische Einrichtungen versehen ist. Bei den elektrischen Einrichtungen handelt es sich beispielsweise um eine Antenne, eine Steuereinheit oder dergleichen. Das Himmelelement dieses Dachmoduls ist formsteif ausgebildet.

Ein formsteifes bzw. starres Himmelelement wird bei einem mit einem vorderen und einem hinteren Windlauf versehenen Fahrzeug so montiert, dass es von vorne durch den für die Windschutzscheibe bestimmten Rahmen in den Fahrzeuginnenraum geschoben und dann von unten über Haltegrifflager und Sonnenblendenlager fixiert wird. In Montageposition untergreift das Himmelelement die Windläufe.

Dächer von Personenkraftwagen können auch in Form eines Dachmoduls ausgebildet sein, das bei der Montage des betreffenden Fahrzeugs mit dessen Rohbau verbunden wird. Das Dachmodul kann komplett vorkonfiguriert sein und neben einer Dachaußenhaut und einem Himmel- bzw. Innerverkleidungselement verschiedene Funktionselemente umfassen. Bei den Funktionselementen handelt es sich beispielsweise um ein Schiebedach, eine Beleuchtung, eine Antenne oder dergleichen.

Die US 6,367,872 B1 zeigt ein Fahrzeugdach mit einer vorgeformten inneren Schale, die den Dachhimmel bildet. Der Dachhimmel ist größer als die Innenmaße der Rahmenöffnung, die durch die Träger bzw. Abschnitte des geschlossenen Rahmenkörpers des Fahrzeugs umgrenzt ist. Der Fahrzeughimmel ist in den überstehenden Bereichen flexibel, so dass er zum Einsetzen in die Öffnung durch partielles Umbiegen der Ränder ohne bleibende Deformation temporär verformt werden kann.

Ein Dachmodul für ein Kraftfahrzeug ist beispielsweise aus der DE 203 11 915 U1 bekannt und mit einer Außenhaut, einer Innenschicht und einer Zwischenschicht versehen, welche die Außenhaut mit der Innenschicht verbindet. Die Innenschicht bildet den Dachhimmel des.Kraftfahrzeugs. Die Zwischenschicht besteht aus faserverstärktem Polyurethanschaum. Als Montagehilfe hat das Dachmodul abklappbare Dachhimmelseitenstreifen. Eine Integration von Funktionselementen ist nicht vorgesehen.

Der Erfindung liegt die Aufgabe zugrunde, ein Fahrzeugdach zu schaffen, das als Dachmodul ausbildbar ist, das mit einem als Funktionselemente tragenden Innenverkleidungselement versehen ist und als komplette Baueinheit von oben an einem Rohbau des betreffenden Fahrzeugs montierbar ist.

Diese Aufgabe ist durch ein Fahrzeugdach mit den Merkmalen des Patentanspruchs 1 gelöst.

Das Fahrzeugdach nach der Erfindung bildet also eine zumindest eine Dachaußenhaut und ein Innenverkleidungselement aufweisende Baueinheit, bei der das Innenverkleidungselement zumindest lokal kraftschlüssig mit der Dachaußenhaut verbunden ist und zumindest in Randbereichen aus einem flexiblen Material gefertigt ist, so dass die lateralen Abmessungen des Innenverkleidungselementes verringerbar sind. Durch diese Maßnahme ist es möglich, ein Dachmodul, das mit einer Dachaußenhaut und einem mit dieser verbundenen Innenverkleidungselement, das als Träger für Funktionselemente dient, im fertig konfigurierten Zustand von oben so an einem Fahrzeugrohbau zu montieren, dass das Innenverkleidungselement auf einfache und optimierte Weise von oben, d.h. nach dem so genannten Top-Load-Verfahren beispielsweise mit einer umlaufenden Faltung in den Innenraum des Fahrzeugs eingebracht und dann von unten mittels geeigneter Fixierelemente als Fahrzeughimmel in Montageposition fixiert wird. Beispielsweise wird das ein Himmelelement darstellende Innenverkleidungselement dabei von unten gegen Windläufe und/oder Dachseitenrahmenbereiche geklappt. Die Fixierung des Innenverkleidungselements in Montageposition erfolgt beispielsweise über Sonnenblendenlager, Haltegriffe oder auch mittels Rastelementen, die an der Innenseite der Dachaußenhaut vorgesehen sind. Das Innenverkleidungselement kann sowohl an Rohbaubauteilen, wie Bereichen des Dachrahmens, oder auch an der Dachaußenhaut befestigt werden.

Der Begriff "Dachaußenhaut" ist in seinem weitesten Sinne dahingehend zu verstehen, dass er sowohl einen einschaligen als auch einen mehrschaligen Aufbau umfasst. Letzterer besteht beispielsweise aus einer äußeren, die Sichtfläche des betreffenden Fahrzeugdachs bildenden Schale und einer die Steifigkeit des Fahrzeugdachs vorgebenden Trägerschale.

Als Funktionselemente sind im vorliegenden Fall Bauelemente bzw. Baugruppen zu verstehen, die beispielsweise elektrischen und/oder mechanischen Ausstattungen des Fahrzeugs, wie einem Innenbeleuchtungsmittel, einer Antenne oder einem Schiebedach, zuzuordnen sind. Die Funktionselemente sind insbesondere an der Oberseite des Innenverkleidungselements angeordnet.

Durch das flexible Material kann das Innenverkleidungselementes auch hinterschnittig in einen Hohlraum oder eine Nut des Fahrzeugs eingreifend fixiert werden. Als flexibles Material ist beispielsweise auch ein Material zu verstehen, das faltbar und/oder biegsam ist.

Das erfindungsgemäß ausgebildete Fahrzeugdach kann durch seine Gestaltung als Baueinheit, die aus Dachaußenhaut und Innenverkleidungselement besteht, einfach an einem Fahrzeugrohbau von oben montiert werden, wobei bei einem etwaig anfallenden Ausbau des Fahrzeugdachs das Innenverkleidungselement unbeschädigt bleiben kann. Durch die Vormontage des kompletten Fahrzeugdachs erleichtern sich auf Seiten eines Fahrzeugherstellers die logistischen Abläufe.

Bei einer bevorzugten Ausführungsform des Fahrzeugdachs nach der Erfindung ist das Innenverkleidungselement zur Verbindung mit der Dachaußenhaut an diese angeschäumt. Insbesondere in diesem Fall besteht das Innenverkleidungselement zumindest bereichsweise aus ein Schaummaterial. Die Herstellung des Fahrzeugdachs kann dann im Wesentlichen in einem Formwerkzeug erfolgen.

Bei einer alternativen Ausführungsform ist das Innenverkleidungselement über eine Klebeverbindung mit der Dachaußenhaut verbunden. Bei der Herstellung eines solchen Fahrzeugdachs können also die Dachaußenhaut und das Innenverkleidungselement in separaten Werkzeugen gefertigt, jeweils mit erforderlichen Funktionselementen versehen und anschließend miteinander verbunden werden.

Um einen separaten Austausch des Innenverkleidungselementes zu ermöglichen, kann das Fahrzeugdach nach der Erfindung auch so ausgelegt sein, dass das Innenverkleidungselement lösbar mit der Dachaußenhaut verbunden ist. Insbesondere bei einer Herstellung des Innenverkleidungselementes aus einem Material wie Polyurethan-Weichschaum kann das Innenverkleidungselement eine abwaschbare Oberfläche aufweisen, was aus Hygienegründen vorteilhaft ist.

Das Innenverkleidungselement ist zur Erreichung der flexiblen Eigenschaften aus einem Weichschaum, insbesondere einem Polyurethan-Weichschaum, gefertigt.

Um Funktionsbereiche, insbesondere Funktionsbereiche wie Kopfaufprallelemente, direkt an dem Innenverkleidungs-element integrieren zu können, ist das Innenverkleidungselement mit Zonen unterschiedlicher Härte ausgebildet. Dies ist über die Schaumdichte gesteuert. In diesem Falle entfällt die bisher erforderliche Montage separater, eine passive Sicherheit bietender Kopfaufprallelemente, was die Herstellungskosten des Fahrzeugdachs verringert.

Beispielsweise zur Realisierung konturierter Flächen an der dem Fahrzeuginnenraum zugewandten Seite kann das Innenverkleidungselement Zonen unterschiedlicher Dicke aufweisen.

Auch kann das Innenverkleidungselement mit Oberflächenbereichen versehen sein, die hinsichtlich ihrer Farbe, Struktur oder dergleichen unterschiedliche Eigenschaften haben.

Die Funktionselemente umfassen bei bevorzugten Ausführungsformen des Fahrzeugdachs nach der Erfindung elektrische Einrichtungen, wie Innenbeleuchtungselemente, insbesondere Leiterbahnen für Innenbeleuchtungselemente, Antennenbauteile und/oder auch Klima- bzw. Lüftungskanäle, die vorzugsweise mit Öffnungen zum Fahrzeuginnenraum verbunden sind. Auch können die Funktionselemente Airbagkomponenten umfassen. Die Airbagkomponenten können insbesondere einem Frontairbag zugeordnet sein, der für Insassen des Fahrzeugfonds wirksam ist. Die Funktionselemente können aber auch mechanische Bauteile sein, die beispielsweise einem Dachöffnungssystem, wie einem Schiebedach, zugeordnet sind.

De Weiteren können an dem Innenverkleidungselement Abklapphilfen für einen Kopfairbag integriert sein, mittels derer Verzögerungen der Airbagaktivierung realisiert werden können. Dies kann durch Zonale Steuerung der Materialeigenschaften realisiert werden.

Wenn das Fahrzeugdach nach der Erfindung mit einem Schiebdach bzw. einem Hub-/Schiebedach versehen ist, sind an der Dachaußenhaut und dem Innenverkleidungselement Ausschnitte vorzusehen, die mit einem Deckelelement zum wahlweisen Öffnen oder zumindest teilweise Öffnen einer Dachöffnung korrespondieren, wobei die erforderlichen mechanischen und elektrischen Bauelemente des Schiebe- bzw. Hub-/Schiebedachs sowohl an dem Innenverkleidungselement als auch an der Dachaußenhaut gelagert sein können.

Grundsätzlich können also an dem Innenverkleidungselement eine Breite Auswahl an Bauteilen integriert sein, die vielfältigen Funktionalitäten zugeordnet sein können

Das Material des Innenverkleidungselements kann selbst eine Dekorseite bilden, so dass die Sichtfläche des Innenverkleidungselements hinsichtlich ihrer Farbe, ihrer Oberfläche und ihrer Struktur ohne zusätzliches Werkzeug ausgebildet werden kann. Bei einer solchen einstückigen Ausbildung der Dekorseite durch das Innenverkleidungselement fällt insbesondere bei einem Fahrzeugdach mit einem Dachöffnungssystem kein Verschnitt bezüglich einer bisher in der Regel eingesetzten Dekorfolie an. Auch fällt kein Kaschieraufwand an. Kosten für eine Dekorfolie entfallen.

Alternativ kann die Dekorseite aber natürlich auch von einer Folie gebildet sein, die bei der Fertigung des Innenverkleidungselements in das betreffende Werkzeug eingelegt wird.

Weitere Vorteile und vorteilhafte Ausgestaltungen des Gegenstandes nach der Erfindung sind der Beschreibung, der Zeichnung und den Patentansprüchen entnehmbar. Zeichnung und den Patentansprüchen entnehmbar.

Ein Ausführungsbeispiel eines Fahrzeugdachs nach der Erfindung ist in der Zeichnung schematisch vereinfacht dargestellt und wird in der nachfolgenden Beschreibung näher erläutert. Es zeigt:
- Fig. 1: einen Dachbereich eines Personenkraftwagens mit einem Dachmodul;
- Fig. 2: einen Längsschnitt durch den Dachbereich bei der Montage des Dachmoduls;
- Fig. 3: einen Querschnitt durch den Dachbereich bei der Montage des Dachmoduls; und
- Fig. 4: einen Fig. 2 entsprechenden Längsschnitt, jedoch mit montiertem Dachmodul.

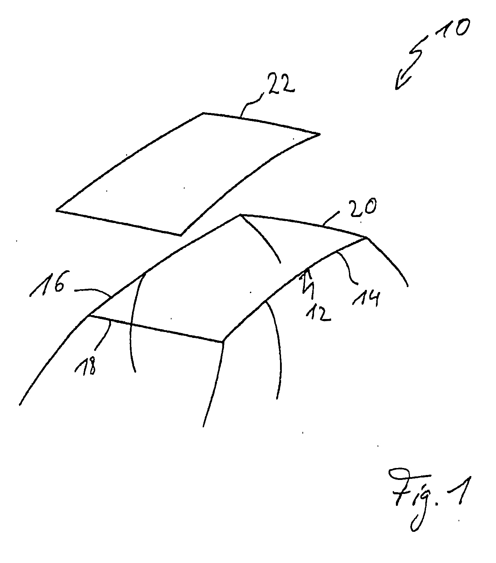

In Fig. 1 ist ein Dachbereich eines Personenkraftwagens 10 dargestellt. Der Dachbereich ist mit einem Dachrahmen 12 versehen, der aus seitlichen, sich in Fahrzeuglängsrichtung erstreckenden Rahmenbereichen 14, 16, einem vorderen Windlauf 18 und einem hinteren Windlauf 20 gebildet ist und der zur Aufnahme eines erfindungsgemäß ausgebildeten, vormontierten und bombierten Dachmoduls 22 dient, das einen Fahrzeuginnenraum überdeckt.

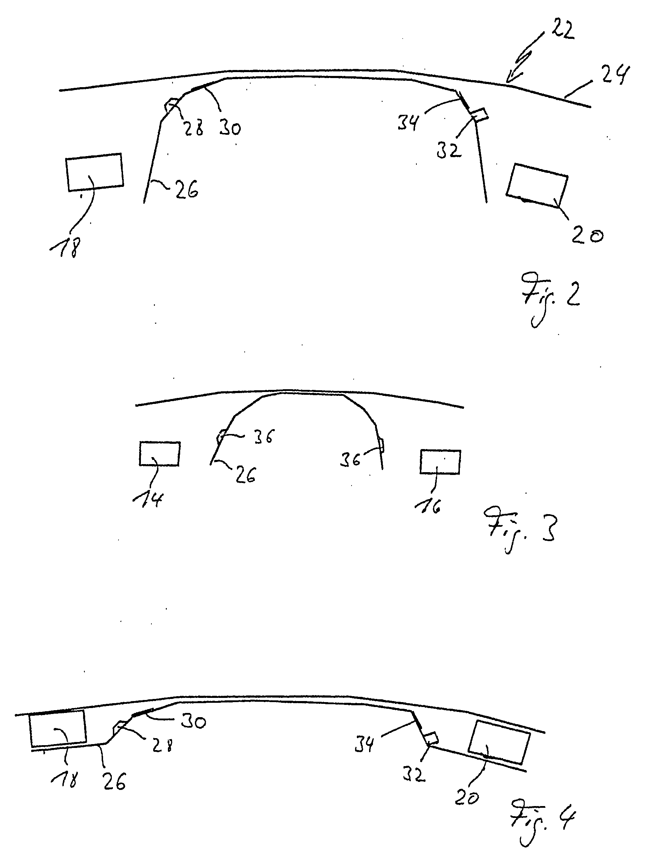

Das Dachmodul 22 weist, wie den Figuren 2 bis 4 zu entnehmen ist, eine mehrlagig aufgebaute Dachaußenhaut 24 und ein Innenverkleidungselement 26 auf, das in einem zentralen Bereich der Dachaußenhaut 24 an dieser angeschäumt ist. Das Innenverkleidungselement 26, das im montierten Zustand den Fahrzeughimmel bildet, ist aus einem Polyurethan-Weichschaum gefertigt. Die Dachaußenhaut 24 besteht aus einer starren, glasfaserverstärkten Polyurethan-Trägerschicht, die beispielsweise nach dem so genannten LFI(long fiber injection)-Verfahren hergestellt ist und mit einer die Sichtfläche bildenden Kunststoffolie aus beispielsweise ABS versehen ist.

Das Innenverkleidungselement 26, das aus Polyurethan-Weichschaum gefertigt ist, ist biegsam bzw. flexibel ausgebildet, so dass es, wie in den Figuren 2 und 3 dargestellt, bei der Montage des Dachmoduls 22 auf dem Dachrahmen 12 mit nach unten hängenden Randbereichen durch die von dem Dachrahmen 12 gebildete Öffnung in den Innenraum des Personenkraftwagens 10 geführt werden kann. Die lateralen Abmessungen des Innenverkleidungselementes 26 können also so verringert bzw. eingestellt werden, dass es von oben durch die von dem Dachrahmen 12 gebildet Öffnung an den Windläufen 18 und 20 und den seitlichen Rahmenbereichen 14 und 16 vorbei geführt werden kann. Wenn dann die Dachaußenhaut 24 beispielsweise über eine Kleberaupe an dem Dachrahmen 12 befestigt ist, wird das Innenverkleidungselement 26 mit seinen Randbereichen an den seitlichen Rahmenbereichen 14 und 16 sowie im Bereich des vorderen Windlaufs 18 und des hinteren Windlaufs 20 fixiert, so dass es den vorderen Windlauf 18 und den hinteren Windlauf 20 untergreift (vgl. Fig. 4) und seitlich in hier nicht näher dargestellte Nuten eingreift, die im Bereich der seitlichen Rahmenbereiche 14 und 16 ausgebildet sind.

Das Innenverkleidungselement 26 bildet einen Träger für Funktionselemente, die im vorliegenden Fall aus einem im Bereich des vorderen Windlaufs 18 angeordneten Leselicht 28 mit zugehörigen Leiterbahnen 30 und einer Antenne 32 mit zugehörigen Leiterbahnen 34 gebildet sind.

Des Weiteren ist das Innenverkleidungselement 26 mit Zonen unterschiedlicher Härte ausgebildet, wobei insbesondere Kopfaufprallzonen 36 ausgebildet sind, die mit einer größeren Shorehärte versehen sind als die übrigen Bereiche des Innenverkleidungselementes 26. Im Bereich der Kopfaufprallzonen 36 ist die Materialstärke des Innenverkleidungselements 26 größer als in den an diese Bereiche angrenzenden Bereichen.

Des Weiteren bildet das Innenverkleidungselement 26 selbst die den Fahrzeuginnenraum begrenzende Sichtfläche, so dass auf eine das Dekor bildende Folie verzichtet werden kann. Auch stellt der eingesetzte Polyurethan-Weichschaum ein abwaschbares Material dar.

### Bezugszeichen

- 10: Personenkraftwagen
- 12: Dachrahmen
- 14: Seitlicher Rahmenbereich
- 16: Seitlicher Rahmenbereich
- 18: Vorderer Windlauf
- 20: Hinterer Windlauf
- 22: Dachmodul
- 24: Dachaußenhaut
- 26: Innenverkleidungselement
- 28: Leselicht
- 30: Leiterbahn
- 32: Antenne
- 34: Leiterbahn
- 36: Kopfaufprallzone

## Patentansprüche

1. Fahrzeugdach, insbesondere eines Personenkraftwagens, umfassend eine Dachaußenhaut (24) und ein Innenverkleidungselement (26), das ein Träger für Funktionselemente (28, 30, 32, 34, 36) ist, wobei das Innenverkleidungselement (26) zumindest lokal kraftschlüssig mit der Dachaußenhaut (24) verbunden ist und zumindest in Randbereichen aus einem flexiblen Material gefertigt ist, so dass seine lateralen Abmessungen einstellbar sind, und das Innenverkleidungselement (26) aus einem Weichschaum gefertigt ist,
**dadurch gekennzeichnet, dass** das Innenverkleidungselement (26) über unterschiedliche Schaumdichte gesteuert mit Zonen unterschiedlicher Härte ausgebildet ist.

2. Fahrzeugdach nach Anspruch 1, **dadurch gekennzeichnet, dass** das Innenverkleidungselement (26) zur Verbindung an die Dachaußenhaut (24) angeschäumt ist.

3. Fahrzeugdach nach Anspruch 1, **dadurch gekennzeichnet, dass** das Innenverkleidungselement (26) über eine Klebeverbindung mit der Dachaußenhaut (24) verbunden ist.

4. Fahrzeugdach nach Anspruch 1, **dadurch gekennzeichnet, dass** das Innenverkleidungselement (26) lösbar mit der Dachaußenhaut (24) verbunden ist.

5. Fahrzeugdach nach einem der Ansprüche 1 bis 4, **dadurch gekennzeichnet, dass** das Innenverkleidungselement (26) faltbar und/oder biegsam ausgebildet ist.

6. Fahrzeugdach nach einem der Ansprüche 1 bis 5, **dadurch gekennzeichnet, dass** das Innenverkleidungselement (26) aus einem Polyurethan-Weichschaum gefertigt ist.

7. Fahrzeugdach nach einem der Ansprüche 1 bis 6, **dadurch gekennzeichnet, dass** an dem Innenverkleidungselement (26) Kopfaufprallelemente (36) integriert sind.

8. Fahrzeugdach nach einem der Ansprüche 1 bis 7, **dadurch gekennzeichnet, dass** das Innenverkleidungselement (26) Zonen unterschiedlicher Dicke aufweist.

9. Fahrzeugdach nach einem der Ansprüche 1 bis 8, **dadurch gekennzeichnet, dass** die Funktionselemente elektrische Einrichtungen (28, 30, 32, 34) umfassen.

10. Fahrzeugdach nach einem der Ansprüche 1 bis 9, **dadurch gekennzeichnet, dass** die Funktionselemente Klima- und/oder Lüftungskanäle umfassen, die vorzugsweise mit Öffnungen zum Fahrzeuginnenraum verbunden sind.

11. Fahrzeugdach nach einem der Ansprüche 1 bis 10, **dadurch gekennzeichnet, dass** die Funktionselemente Airbagkomponenten umfassen.

12. Fahrzeugdach nach einem der Ansprüche 1 bis 11, **dadurch gekennzeichnet, dass** das Innenverkleidungselement (26) eine Dekorseite aufweist.

13. Fahrzeugdach nach Anspruch 12, **dadurch gekennzeichnet, dass** die Dekorseite von dem Material des Innenverkleidungselementes (26) gebildet ist.

## Claims

1. Vehicle roof, in particular of a passenger vehicle, comprising a roof outer skin (24) and an interior lining element (26) which is a support for functional elements (28, 30, 32, 34, 36), wherein the interior lining element (26) is frictionally connected to the roof outer skin (24) at least locally and is manufactured, at least in edge regions, from a flexible material such that its lateral dimensions can be adjusted, and the interior lining element (26) is manufactured from a flexible foam, **characterized in that** the interior lining element (26) is designed with zones of differing hardness controlled by different foam densities.

2. Vehicle roof according to Claim 1, **characterized in that** the interior lining element (26) is foamed under the roof outer skin (24) for connection thereto.

3. Vehicle roof according to Claim 1, **characterized in that** the interior lining element (26) is connected to the roof outer skin (24) via an adhesive joint.

4. Vehicle roof according to Claim 1, **characterized in that** the interior lining element (26) is connected releaseably to the roof outer skin (24).

5. Vehicle roof according to one of Claims 1 to 4, **characterized in that** the interior lining element (26) is a foldable and/or pliant design.

6. Vehicle roof according to one of Claims 1 to 5, **characterized in that** the interior lining element (26) is manufactured from a flexible polyurethane foam.

7. Vehicle roof according to one of Claims 1 to 6, **characterized in that** head impact elements (36) are integrated in the interior lining element (26).

8. Vehicle roof according to one of Claims 1 to 7, **characterized in that** the interior lining element (26) has zones of differing thickness.

9. Vehicle roof according to one of Claims 1 to 8, **characterized in that** the functional elements comprise electrical devices (28, 30, 32, 34).

10. Vehicle roof according to one of Claims 1 to 9, **characterized in that** the functional elements comprise air conditioning and/or ventilation ducts which are preferably connected to the vehicle interior by means of openings.

11. Vehicle roof according to one of Claims 1 to 10, **characterized in that** the functional elements comprise airbag components.

12. Vehicle roof according to one of Claims 1 to 11, **characterized in that** the interior lining element (26) has a decorative side.

13. Vehicle roof according to Claim 12, **characterized in that** the decorative side is formed by the material of the interior lining element (26).

## Revendications

1. Toit de véhicule, en particulier d'un véhicule automobile léger, comprenant un panneau extérieur de toit (24) et un élément d'habillage interne (26), constituant un support pour des éléments fonctionnels (28, 30, 32, 34, 36), l'élément d'habillage interne (26) étant connecté au moins localement par engagement par force au panneau extérieur de toit (24) et étant fabriqué, au moins dans des régions de bord, en un matériau flexible, de sorte que ses dimensions latérales puissent être ajustées, et l'élément d'habillage interne (26) étant fabriqué en une mousse souple,
**caractérisé en ce que** l'élément d'habillage interne (26) est réalisé avec des zones de dureté différente commandées par différentes densités de mousse.

2. Toit de véhicule selon la revendication 1,
**caractérisé en ce que** l'élément d'habillage interne (26) est moussé en vue de sa liaison au panneau extérieur de toit (24).

3. Toit de véhicule selon la revendication 1,
**caractérisé en ce que** l'élément d'habillage interne (26) est connecté au panneau extérieur de toit (24) par le biais d'un assemblage collé.

4. Toit de véhicule selon la revendication 1,
**caractérisé en ce que** l'élément d'habillage interne (26) est connecté de manière détachable au panneau extérieur de toit (24).

5. Toit de véhicule selon l'une quelconque des revendications 1 à 4, **caractérisé en ce que** l'élément d'habillage interne (26) est réalisé de manière pliable et/ou flexible.

6. Toit de véhicule selon l'une quelconque des revendications 1 à 5, **caractérisé en ce que** l'élément d'habillage interne (26) est fabriqué en une mousse souple de polyuréthanne.

7. Toit de véhicule selon l'une quelconque des revendications 1 à 6, **caractérisé en ce que** des éléments d'impact de la tête (36) sont intégrés à l'élément d'habillage interne (26).

8. Toit de véhicule selon l'une quelconque des revendications 1 à 7, **caractérisé en ce que** l'élément d'habillage interne (26) présente des zones d'épaisseur différente.

9. Toit de véhicule selon l'une quelconque des revendications 1 à 8, **caractérisé en ce que** les éléments fonctionnels comprennent des dispositifs électriques (28, 30, 32, 34).

10. Toit de véhicule selon l'une quelconque des revendications 1 à 9, **caractérisé en ce que** les éléments fonctionnels comprennent des canaux de climatisation et/ou d'aération, qui sont de préférence connectés à des ouvertures donnant dans l'habitacle du véhicule.

11. Toit de véhicule selon l'une quelconque des revendications 1 à 10, **caractérisé en ce que** les éléments fonctionnels comprennent des composants d'airbag.

12. Toit de véhicule selon l'une quelconque des revendications 1 à 11, **caractérisé en ce que** l'élément d'habillage interne (26) présente un côté décoratif.

13. Toit de véhicule selon la revendication 12, **caractérisé en ce que** le côté décoratif est formé par le matériau de l'élément d'habillage interne (26).
